**Europäisches Patentamt**

**European Patent Office**

**Office européen des brevets**

(19)

(11) Veröffentlichungsnummer: **0 317 715**
**A2**

(12) # EUROPÄISCHE PATENTANMELDUNG

(21) Anmeldenummer: **88113592.5**

(22) Anmeldetag: **22.08.88**

(51) Int. Cl.⁴: **B23Q 5/00**

Die Bezeichnung der Erfindung wurde geändert (Richtlinien für die Prüfung im EPA, A-III, 7.3).

(30) Priorität: **02.10.87 CH 3851/87**

(43) Veröffentlichungstag der Anmeldung:
**31.05.89 Patentblatt 89/22**

(84) Benannte Vertragsstaaten:
**CH DE FR IT LI**

(71) Anmelder: **Suhner Inter-Trade AG**
**Grienbachstrasse**
**CH-6340 Baar(CH)**

(72) Erfinder: **Hürbin, Walter Albert**
**Gen. Guisaustrasse 61**
**CH-5415 Nussbaumen(CH)**

(74) Vertreter: **Troesch, Jacques J., Dipl.-Ing. et al**
**Dr. Troesch AG Patentanwaltsbüro**
**Walchestrasse 19/Postfach**
**CH-8035 Zürich(CH)**

(54) **Vorrichtung und Verfahren zum Verbinden und Lösen eines Werkzeuges mit resp. von seinem Antrieb.**

(57) Um ein Werkzeug (3) mit einer Antriebswelle (2) zu verbinden, ist eine Einrichtung vorgesehen, die die Antriebsverbindung zwischen der Welle (2) und dem Werkzeug (3) trennbar erstellt. Zum Herstellen der antriebs-trennbaren Verbindung ist eine Kupplung (16, 19) vorgesehen, die zwischen Werkzeug (3) und Antriebswelle (2) angeordnet ist.

Fig 2

EP 0 317 715 A2

## Vorrichtung zum Verbinden eines Werkzeuges, Verfahren zum antriebs-trennbaren Verbinden eines Werkzeuges sowie Kupplungsstück und Anordnung zum Antrieb desselben

Die vorliegende Erfindung bezieht sich auf eine Vorrichtung zum Verbinden eines Werkzeuges mit einer Antriebswelle, auf ein Verfahren zum antriebs-trennbaren Verbinden eines Werkzeuges an einer Antriebswelle sowie auf ein Kupplungsstück zum Verbinden eines Werkzeuges mit einer Antriebswelle mit einer Vorrichtung und auf eine Anordnung zum Antrieb eines Werkzeuges.

Beim Anschliessen von Werkzeugen an eine Antriebswelle, beispielsweise einer Werkzeug- oder Handwerkzeugmaschine, geschieht dies normalerweise durch direktes Aufbringen des Werkzeuges auf die Antriebswelle. Insbesondere beim Verwenden von biegsamen Wellenantrieben kann es vorkommen, dass sich der Arbeitsbereich nicht unmittelbar neben der den Antrieb erzeugenden Maschine befindet. Unter anderem aus Sicherheitsgründen, oder zum Auswechseln des Werkzeuges, ist es erwünscht oder sogar notwendig, dass der Antrieb für das Werkzeug unterbrochen werden kann. Dies geschieht normalerweise durch Abschalten des Antriebsmotores mittels eines Ein/Aus-Schalters. Der Ein/Aus-Schalter wird vorteil hafterweise im Arbeitsbereich angeordnet, so dass die Maschine rasch abgeschaltet werden kann.

Insbesondere aber bei Unfällen ist es oft nur schwer möglich, den Schalter zu betätigen und zudem verstreicht für diesen Vorgang wertvolle Zeit. Weiter ist ein oft erfolgendes Ein- und Ausschalten des Antriebsmotors, beispielsweise aus verschleisstechnischen Gründen, unerwünscht.

Es ist daher eine Aufgabe der vorliegenden Erfindung, eine Vorrichtung zum Verbinden eines Werkzeuges mit einer Antriebswelle vorzuschlagen, ohne die oben aufgeführten Nachteile.

Erfindungsgemäss wird dies durch eine Vorrichtung gemäss dem Wortlaut, vorzugsweise nach mindestens einem der Ansprüche, insbesondere nach Anspruch 1, gelöst.

Die erfindungsgemässe Vorrichtung umfasst dabei eine Einrichtung zum trennbaren Uebertragen des Antriebs von der Welle an das Werkzeug.

Vorzugsweise wird zum antriebs-trennbaren Verbinden des Werkzeuges mit der Antriebswelle eine Kupplung verwendet, die zwischen Werkzeug und Antriebswelle angeordnet wird.

Um zwei Kupplungshälften der vorgeschlagenen Kupplung trennbar aneinanderzufügen, wird weiter ein Mechanismus vorgeschlagen, welcher das lösbare Aneinanderfügen, unter Einwirkung einer von aussen betätigbaren Kraft, bewirkt. Bei dieser Kraft handelt es sich im wesentlichen um eine Kraft, die vorzugsweise durch eine das Werkzeug bedienende Person ausgelöst wird.

Damit die beiden Kupplungshälften beim Aufheben der Krafteinwirkung wieder voneinander gelöst werden, wird weiter eine Federanordnung vorgeschlagen, die bei Aufheben der Kraft die beiden Kupplungshälften selbsttätig voneinander trennt, und damit die Antriebsverbindung unterbricht.

In einer bevorzugten Ausführungsvariante umfasst die erfindungsgemässe Vorrichtung eine im wesentlichen zylinderförmige Aufnahme, vorzugsweise mit einer Mitnehmerkontur ausgestaltet, für die Aufnahme der Antriebswelle; mindestens eine Kupplung zum trennbaren Erstellen der Antriebsverbindung von der Welle zum Werkzeug; einen Hebelmechanismus zum trennbaren Betätigen der Kupplung; eine Federanordnung zum Trennen der Antriebsverbindung und eine weitere Antriebswelle zum Einführen in das Werkzeug, um dieses anzutreiben.

Damit beim Verbinden von Werkzeug und Welle mit der erfindungsgemässen Vorrichtung eine verdrehsichere, lösbare Arretierung möglich ist, wird weiter je die Anordnung eines lösbaren Arretierstiftes, wie beispielsweise eines Rasterstiftes, vorgeschlagen, welcher je in eine Aussparung im Werkzeug und in der Antriebswelle lösbar eingeführt werden kann.

In einer weiteren bevorzugten Ausführungsvariante der Erfindung wird die Verwendung einer Klauenkupplung vorgeschlagen.

Zum antriebs-trennbaren Verbinden eines Werkzeuges an einer Antriebswelle wird weiter ein Verfahren vorgeschlagen, wodurch man die Welle und das Werkzeug mittels eines Kupplungsstückes zusammenfügt, welches eine Kupplung umfasst und worauf man die Antriebsverbindung durch Betätigen der Kupplung erzeugt, wobei die Kupplung bei Aufheben der Betätigung durch eine Federanordnung im Kupplungsstück selbsttätig gelöst wird, zum Unterbrechen der Antriebsverbindung.

Die erfindungsgemäss vorgeschlagenen Vorrichtungen eignen sich zur Herstellung eines Kupplungsstückes, zum antriebstrennbaren Verbinden eines Werkzeuges mit einer Antriebswelle. Darüberhinaus eignet sich die erfindungsgemässe Vorrichtung für jede Art von mechanischen Antriebssystemen, wo der Antrieb unterbrochen werden soll, ohne dass ein Antriebsmotor abgestellt werden muss. Es ist durchaus denkbar, dass Werkzeug, Antriebswelle und erfindungsgemässe Vorrichtung in ein und demselben Gerät untergebracht sind.

Bei der erfindungsgemäss vorgeschlagenen Vorrichtung kann es sich aber auch um ein selbständiges Werkteil handeln oder sie kann am Werkzeug, mit diesem verbunden,oder an der Antriebswelle, mit dieser verbunden, angeordnet sein.

Weiter wird eine Anordnung zum Antrieb eines Werkzeuges vorgeschlagen, die eine erfindungsgemässe Vorrichtung umfasst.

Anschliessend wird nun die Erfindung anhand der beispielsweisen Verwendung in einem Kupplungshandstück beschrieben, welches sich zum Erstellen einer antriebs-trennbaren Verbindung zwischen einer flexiblen Antriebswelle und einem Werkzeug eignet.

Das Kupplungshandstück wird anhand von Figuren näher erläutert.

Es zeigen:

Fig. 1 die erfindungsgemässe Anordnung eines Kupplungshandstückes zwischen einer flexiblen Welle und einem Werkzeug,

Fig. 2 einen Längsschnitt durch das erfindungsgemässe Kupplungshandstück vor Einführen der Antriebswelle,

Fig. 3 den Längsschnitt gemäss Fig. 2 beim Erstellen der antriebs-trennbaren Verbindung,

Fig. 4 einen Querschnitt durch das Kupplungshandstück entlang der Linie A - A,

Fig. 5 einen Querschnitt durch das Kupplungshandstück entlang der Linie B - B, und

Fig. 6 die Ausgestaltung einer Klauenkupplung, verwendet im Kupplungshandstück gemäss Fig. 2.

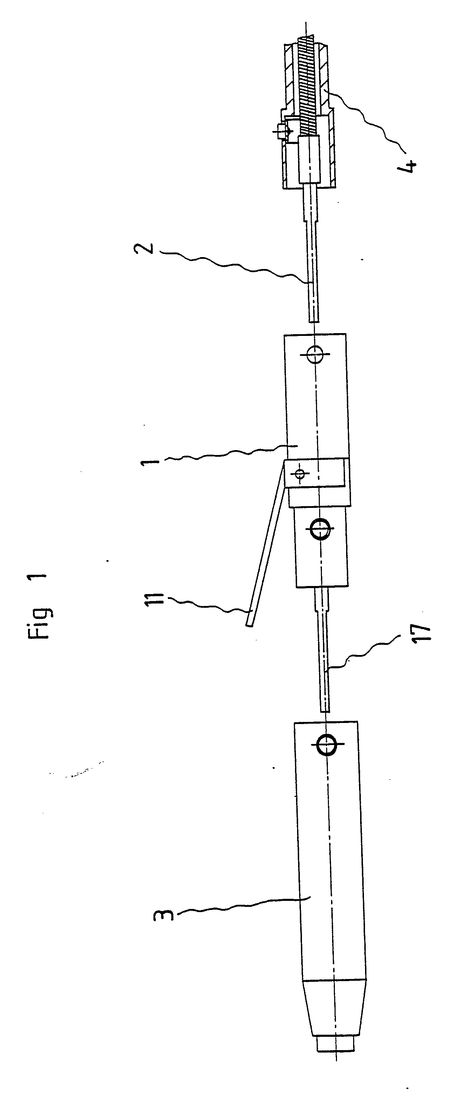

In Fig. 1 ist zunächst schematisch dargestellt, wie ein Kupplungshandstück 1 zwischen einer Antriebswelle 2 und einem Werkzeug 3 zwischengeschaltet ist. Der Funktionsablauf beim Anschliessen der Welle 2 an das Werkstück 3 erfolgt, indem die Antriebswelle 2, beispielsweise einer biegsamen Wellenanordnung 4, in das Kupplungshandstück 1 eingesteckt wird. Das Kupplungshandstück 1 seinerseits wird mit einer weiteren Antriebswelle 17 in das Werkstück 3 eingeführt. Zunächst ist wohl eine örtliche, nicht aber eine antriebsmässige Verbindung zwischen der Welle 2 und dem Werkzeug 3 hergestellt. Letzteres geschieht nun durch Betätigen der Hebelanordnung 11 resp. durch Herunterdrücken des Hebels auf das Kupplungshandstück 1. Durch diese Betätigung wird der Antrieb von der Welle 2 zum Werkzeug 3 hergestellt. Beim Loslassen des Hebels 11 wird der Antrieb wieder unterbrochen.

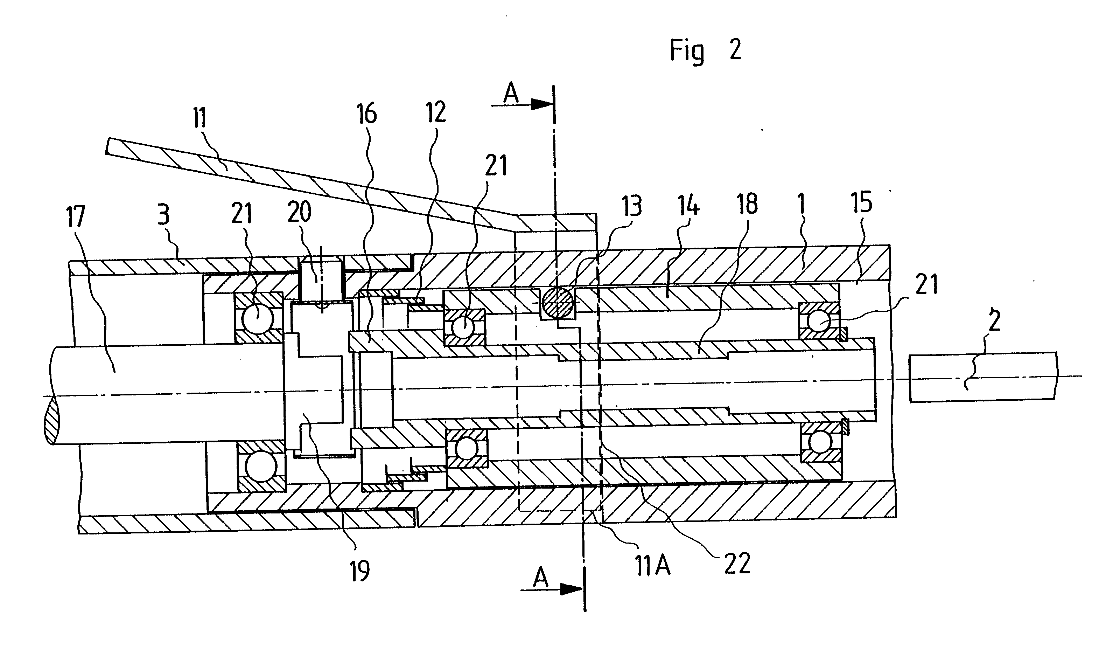

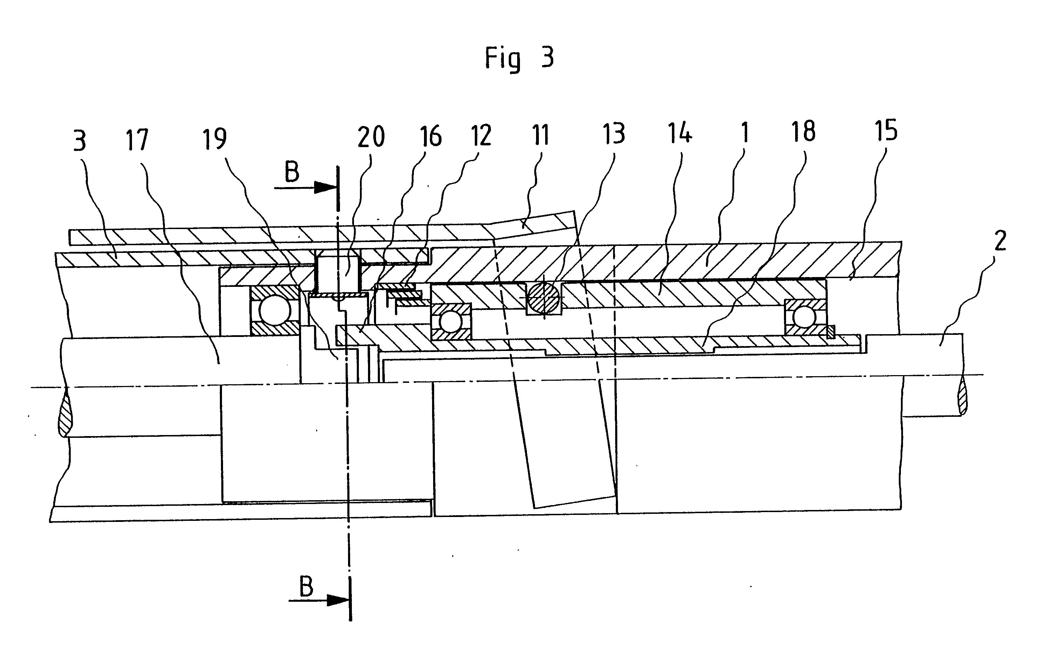

In den Fig. 2 und 3 wird im Querschnitt das Innere des Kupplungshandstückes 1 näher dargestellt.

Zunächst ersichtlich ist wiederum der Hebelmechanismus 11, der einerseits in einem Querstift 13 gelagert ist und der zwei seitlich zum Kupplungshandstück angeordnete Laschenteile 11a umfasst. Diese Laschenteile 11a des Hebels 11 liegen an einer Kante 22 des Handstückes an. Der Querstift 13 ist längsverschiebbar in einem Kolben 14 angeordnet, welcher ebenfalls ana log dem Querstift 13 in Längsrichtung in einer Gehäusebohrung 15 verschiebbar ist. Innenliegend zum Kolben 14, in Lagern 21 gelagert, liegt ein Aufnahmeraum mit Mitnehmerkonturen 18, zur Aufnahme der Antriebswelle 2.

Zur Erstellung der eigentlichen Antriebsverbindung zwischen der Antriebswelle 2 und dem Werkzeug 3 sind zwei Kupplungshälften 16 und 19 angeordnet, die in Fig. 2 getrennt dargestellt sind. Damit die beiden Kupplungshälften 16 und 19 in getrenntem Zustand gehalten sind, ist weiter eine Federanordnung 12 angeordnet. Mit der Kupplungshälfte 19 wirkverbunden ist eine weitere Antriebswelle 17, zum Einführen in das Werkzeug 3, die nur teilweise dargestellt ist. Diese Welle 17 ist über weitere Lager 21 im Kupplungshandstück gelagert. Zum verdrehbaren Arretieren des Werkzeuges 3 ist weiter ein Rasterstift 20 angeordnet.

Zum Erstellen der Antriebsverbindung wird nun zunächst die Antriebswelle 2 in eine Aufnahme, innerhalb der Mitnehmerkonturen 18 liegend, eingeführt. Die Antriebswelle 2 resp. das damit verbundene Gehäuse, beispielsweise einer biegsamen Welle, Wird über einen Rasterstift (nicht gezeigt) mit dem Kupplungshandstück verdrehsicher arretiert. Anschliessend wird das Kupplungshandstück mittels der Welle 17 in das Werkzeug 3 eingeführt, und ebenfalls über einen Rasterstift 20 verdrehsicher arretiert. Nun sind Welle und Werkzeug fest miteinander verbunden, jedoch ohne Uebertragung des Antriebes von der Welle 2 zum Werkzeug 3. Zur Herstellung der Antriebs verbindung wird nun, wie in Fig. 3 ersichtlich, der Hebel 11 gegen das Kupplungshandstück 1 gedrückt und damit der Querstift 13, infolge des Anstehens der Hebellaschen 11a am Anschlag 22, in Längsrichtung gegen die Kupplungsverbindung geschoben. Mit dem Querstift 13 werden auch der Kolben 14 und die Mitnehmerkontur 18 in derselben Richtung verschoben, wodurch die Kupplungshälfte 16 in Richtung der anderen Kupplungshälfte 19 verschoben wird. Sobald die beiden Kupplungshälften 16 und 19 in Berührung kommen, wird die Antriebsverbindung zwischen der Welle 2 und dem Werkzeug 3 hergestellt.

Falls nun ein Bearbeitungsprozess mittels des Werkzeuges 3 unterbrochen werden soll, beispielsweise infolge eines Unfalles, wird der Hebel 11 wieder losgelassen. Durch die Feder l2 werden der Kolben 14, die Mitnehmerkontur 18 wie auch der Querstift 13 in entgegengesetzter Richtung in der Gehäusebohrung 15 verschoben. Dadurch wird einerseits die Kupplungsverbindung resp. die Antriebsverbindung unterbrochen und anderseits der Hebel 11 wieder nach aussen geschwenkt. Ein derartiger Unterbruch kann beispielsweise auch dann erfolgen, wenn ein Werkzeug 3 durch ein anderes ausgewechselt werden muss, ohne dass man den Antrieb der Antriebswelle 2 abschalten will.

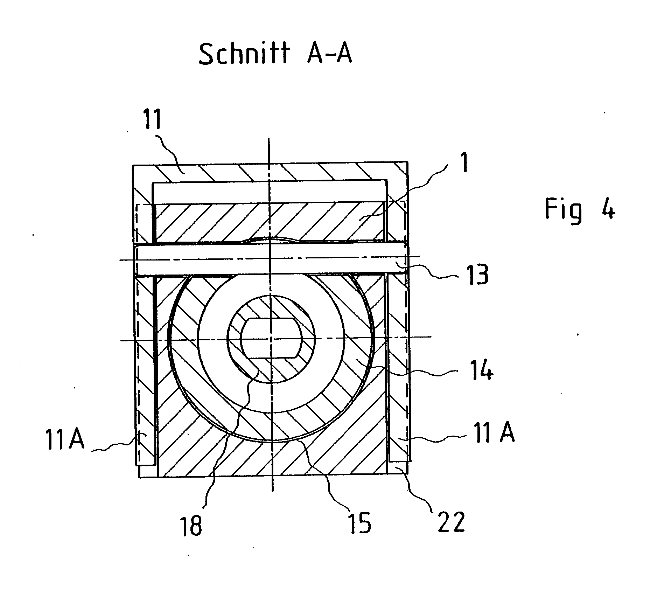

In Fig. 4 ist ein Querschnitt durch das Kupplungshandstück gemäss der Linie A - A dargestellt. Dabei deutlich ersichtlich sind die beiden seitlichen Hebellaschen 11a, die je an einem Anschlag 22 anliegen.

Innerhalb des vierkant-ausgebildeten Gehäuses 1 des Kupplungshandstückes angeordnet, ist eine runde Gehäusebohrung 15, in welcher ein Kolben 14 in Längsrichtung verschiebbar ist. In derselben Weise, in Längsrichtung verschiebbar, ist der Querstift 13, in welchem der Hebel 11 gelagert ist. Aufgrund der dargestellten Mitnehmerkontur 18 wird deutlich, dass bei einer analog ausgebildeten Antriebswelle 2 eine einwandfreie Kraftübertragung möglich ist.

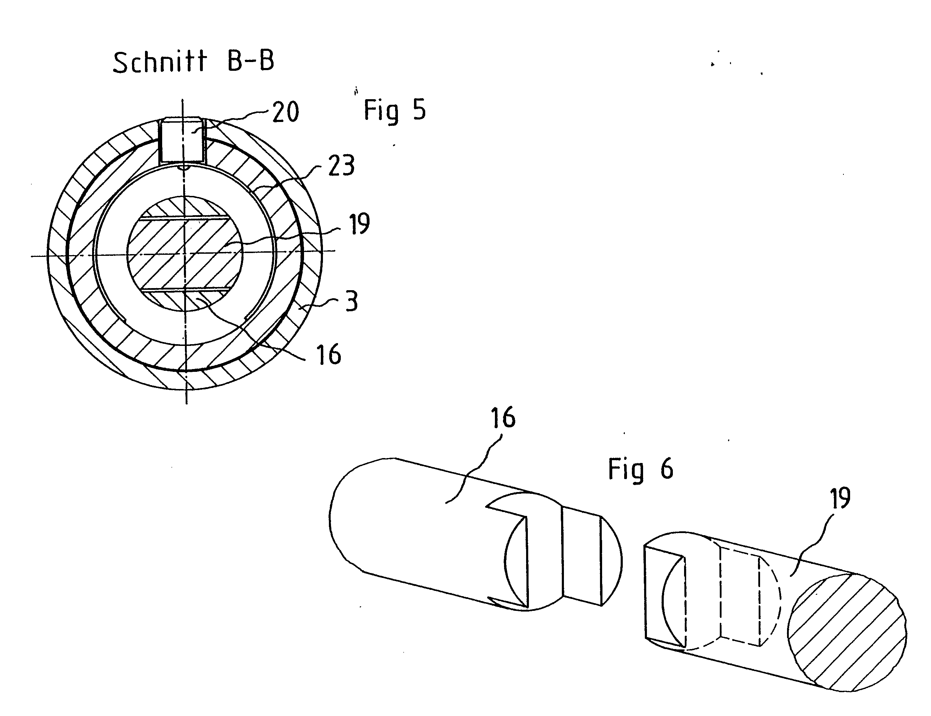

In Fig. 5 wiederum ist ein Querschnitt des erfindungsgemässen Kupplungshandstückes entlang der Linie B - B dargestellt. Deutlich werden hier die beiden Kupplungshälften 16 und 19 ersichtlich. Weiter dargestellt ist der Rasterstift 20, welcher durch eine Spannfeder 23 nach aussen, zum Einrasten in ein Werkzeug 3, gedrückt wird. Zur Montage des Werkzeuges wird der Rasterstift 20 niedergedrückt und rastet im Gegenstück ein. Der Rasterstift 20 ist für eine einfache Montage bzw. Demontage des Werkzeuges vorteilhafterweise um 90° zum Hebel versetzt und dient zugleich als Verdrehsicherung des Werkzeuges gegenüber dem Kupplungshandstück.

In Fig. 6 ist eine bevorzugt verwendete Klauenkupplung dargestellt. Damit die beiden Kupplungshälften 16 und 19 auch bei einer maximalen Momentübertragung im Betriebszustand erfolgen können, werden die Federelemente 12, wie in den Fig. 2 und 3 dargestellt, ausreichend vorgespannt. Dadurch werden die beiden Kupplungshälften 16 und 19 getrennt, sobald der Hebel 11 losgelassen wird, und der Kolben 14 und der Hebel 11 werden in die Ausgangslage gemäss Fig. 2 zurück versetzt. Der Hebel 11 kann zur Erhöhung der Sicherheit gegen ein willkürliches Betätigen, z.B. beim Auswechseln des Werkzeuges, mit einer Sperrklinke (nicht gezeigt) versehen werden.

Die in den Fig. 1 bis 6 dargestellte erfindungsgemässe Vorrichtung kann nicht nur bei dem dargestellten Kupplungshandstück verwendet werden, sondern lässt sich bei der Antriebsübertragung von irgend einer Antriebswelle auf irgend ein Werkzeug anwenden. Denkbar ist z.B., dass ein ähnliches Kupplungshandstück, fest verbunden mit einer biegsamen Welle, angeordnet ist. Wohl aufwendiger, aber ebenfalls denkbar, ist die Anordnung einer erfindungsgemässen Vorrichtung direkt im Werkzeug. Schlussendlich denkbar ist auch eine Kombination von Welle, Kupplungshandstück und Werkzeug in einem Gerät.

## Ansprüche

1. Vorrichtung zum Verbinden eines Werkzeuges (3) mit einer Antriebswelle (2), vorzugsweise nach mindestens einem der Ansprüche, dadurch gekennzeichnet, dass sie eine Einrichtung (1) zum trennbaren Uebertragen des Antriebes von der Welle (2) an das Werkzeug (3) umfasst.

2. Vorrichtung, vorzugsweise nach mindestens einem der Ansprüche, wie nach Anspruch 1, zum antriebs-trennbaren Verbinden eines Werkzeuges (3) mit einer Antriebswelle (2), dadurch gekennzeichnet, dass sie mindestens eine Kupplung (16, 19) umfasst, die zwischen Werkzeug (3) und Antriebswelle (2) angeordnet ist.

3. Vorrichtung, vorzugsweise nach mindestens einem der Ansprüche, wie nach Anspruch 1 oder 2, dadurch gekennzeichnet, dass sie einen Mechanismus (11, 13) umfasst, der unter Einwirkung einer von aussen betätigbaren Kraft zwei Kupplungshälften (16, 19) trennbar aneinanderfügt, zum Erstellen der Antriebsverbindung.

4. Vorrichtung, vorzugsweise nach mindestens einem der Ansprüche, wie nach den Ansprüchen 1 bis 3, dadurch gekennzeichnet, dass sie eine Federanordnung (12) umfasst, die die Antriebsverbindung bei Aufheben der Kraft selbsttätig unterbricht.

5. Vorrichtung, vorzugsweise nach mindestens einem der Ansprüche, wie nach den Ansprüchen 1 bis 4, dadurch gekennzeichnet, dass sie
- eine im wesentlichen zylinderförmige Aufnahme, vorzugsweise mit einer Mitnehmerkontur (18) ausgestaltet, für die Antriebswelle (2),
- mindestens eine Kupplung (16, 19) zum trennbaren Erstellen der Antriebsverbindung von der Welle (2) zum Werkzeug (3),
- einen Hebelmechanismus (11, 13, 14) zum trennbaren Betätigen der Kupplung (16, 19),
- eine Federanordnung (12) zum Trennen der Antriebsverbindung, und
- eine weitere Antriebswelle (17) zum Einführen in das Werkzeug (3), umfasst.

6. Vorrichtung, vorzugsweise nach mindestens einem der Ansprüche, wie nach den Ansprüchen 1 bis 5, dadurch gekennzeichnet, dass sie je einen lösbaren Arretierstift (20), vorzugsweise je einen Rasterstift, für das Werkzeug (3) und die Antriebswelle (2) umfasst, zum verdrehsicheren lösbaren Verbinden mit der Vorrichtung (1).

7. Vorrichtung, vorzugsweise nach mindestens einem der Ansprüche, wie nach den Ansprüchen 1 bis 6, dadurch gekennzeichnet, dass die Kupplung (16, 19) im wesentlichen eine Klauenkupplung ist.

8. Verfahren zum antriebs-trennbaren Verbinden eines Werkzeuges (3) an einer Antriebswelle (2), vorzugsweise nach mindestens einem der Ansprüche, dadurch gekennzeichnet, dass man die Welle (2) und das Werkzeug (3) mittels eines Kupplungsstückes (1) zusammenfügt, das eine Kupplung (16, 19) umfasst, und anschliessend die Antriebsverbindung durch Betätigen der Kupplung (16, 19) erzeugt, wobei die Kupplung bei Aufheben der Betätigung durch eine Federanordnung (12) im Kupplungsstück (1) selbsttätig gelöst wird, zum Unterbrechen der Antriebsverbindung.

9. Kupplungsstück zum Verbinden eines Werkzeuges (3) mit einer Antriebswelle (2) mit einer Vorrichtung, vorzugsweise nach mindestens einem der Ansprüche.

10. Anordnung zum Antrieb eines Werkzeuges (3), dadurch gekennzeichnet, dass sie mindestens eine Vorrichtung, vorzugsweise nach mindestens einem der Ansprüche, umfasst.

Fig 1

EP 0 317 715 A2

Fig 2

EP 0 317 715 A2

Fig 3

## Schnitt A-A

Fig 4

EP 0 317 715 A2

Schnitt B-B

Fig 5

20

23

19

3

16

Fig 6

16

19

EP 0 317 715 A2